Europäisches Patentamt

European Patent Office

Office européen des brevets

(11) Publication number: 0 498 066 A2

# EUROPEAN PATENT APPLICATION

(21) Application number: 91121156.3

(22) Date of filing: 10.12.91

(51) Int. Cl.5: G05B 19/05

(30) Priority: 08.02.91 JP 17502/91

(43) Date of publication of application:
12.08.92 Bulletin 92/33

(84) Designated Contracting States:
DE DK FR GB NL

(71) Applicant: HITACHI, LTD.
6, Kanda Surugadai 4-chome
Chiyoda-ku, Tokyo 100(JP)

(72) Inventor: Kikuchi, Tadanori
Kitaryo 201, 1782-1, Oide, Nakajomachi
Kitakanbara-gun Niigata-ken(JP)
Inventor: Kurokawa, Naohiro
1023, Tagai
Shibata-shi(JP)

(74) Representative: Patentanwälte Beetz - Timpe -
Siegfried - Schmitt-Fumian- Mayr
Steinsdorfstrasse 10
W-8000 München 22(DE)

(54) Programmable logic controller.

(57) A programming unit (101) for entering control conditions to a programmable logic controller (100) includes control instruction keys, numerical keys and analog specifying keys (102). The input value for an input module related to an input specified as an analog signal is converted into a digital value depending on a ratio based on the value input through the numerical keys. A digital control signal is obtained by processing the digital value or an analog signal converted from the digital value and supplied to the controller (100) through an output unit. The programmable logic controller (100) may provide a modification unit for modifying a digital value to be converted and another conversion unit for converting the digital value into an analog value and displaying the result. In the controller (100), the resolution defined on the predetermined bit arrangement is applied to the digital value converted from the input value. The programming unit has a memory (107) for storing an input value from each key and may be connected to a plurality of programmable logic controllers (100) in sequence for supplying the same control condition.

FIG.6

BACKGROUND OF THE INVENTION

The present invention relates to a programmable logic controller which provides a programming device for creating a sequence program and more particular to the programmable logic controller which is appropriate to creating a sequence program for treating an analog value and the programming device therefor.

Some types of programmable logic controllers have been disclosed in the European Patent Publication No. 0156162B1, the United States Patent No. 4,969,119 and JP-A Nos. 57-185512, 60-198605 and 62-69057.

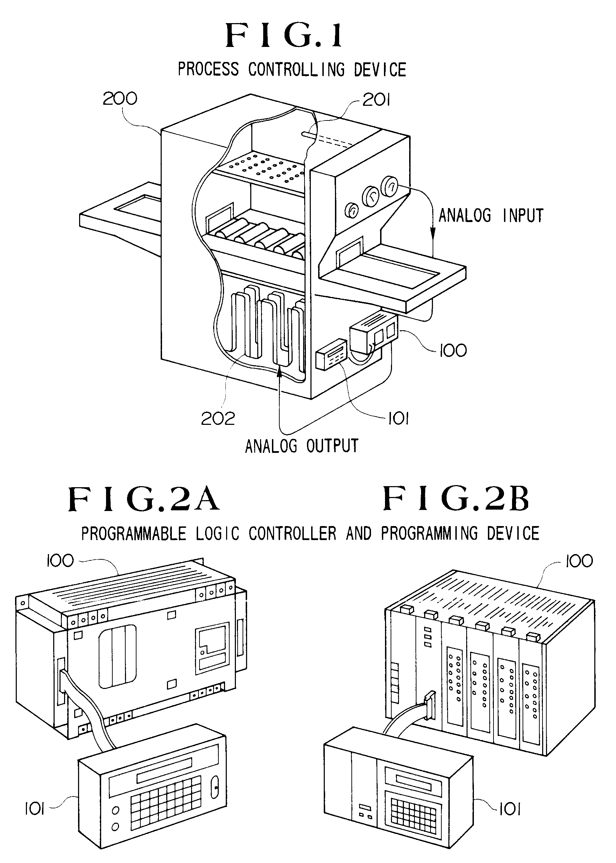

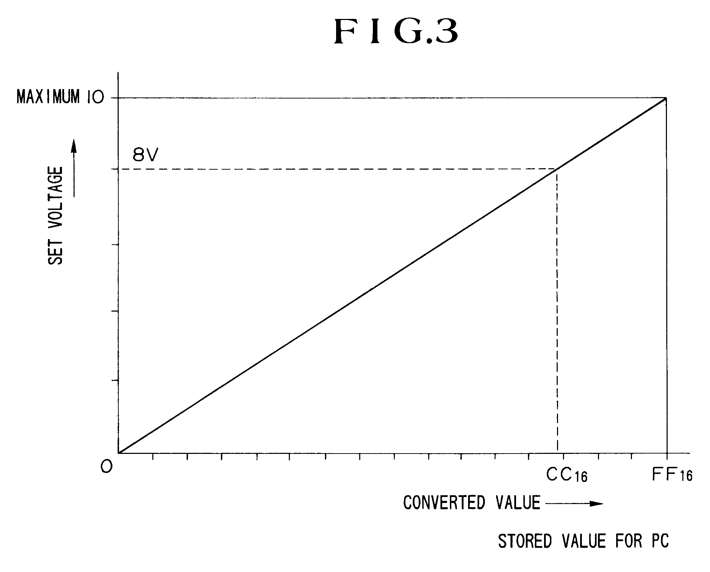

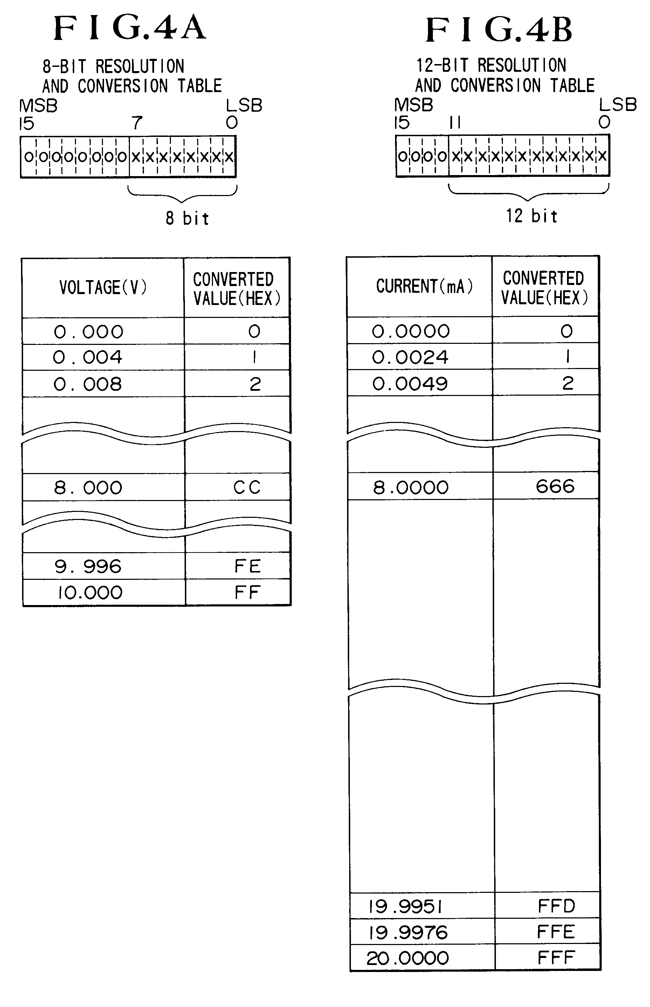

A programmable logic controller is typically designed to read a keying signal from a micro switch provided on the device to be controlled, perform various operations of the keying signal, output the operating result as an external output signal to the device to be controlled, and control the device to be controlled in accordance with a predetermined sequence. In recent days, as shown in Fig. 1, the programmable logic controller has an additional function of reading an analog data from a process controlling device 200, the analog data indicating a flow rate or a temperature detected in a temperature detector 201, perform an PI operation of the inputted analog data, and output the operating result as a control signal to a heater 202, for example. Figs. 2A and 2B show outer appearances of these programmable controllers, in which 100 is a main body of the programmable controller and 101 is a detachable programming device. For creating the portion of the sequence program for the proportional-plus-integral control, it is necessary to use an analog data. That is to say, in case that the sequence program for controlling any load in response to an analog data output from the device to be controlled through hardware and outputs an operation result to the device to be controlled through the hardware by a sequential control program, the operator has to take the following steps of specifying a threshold value for comparison with a value converted from the analog value. For example, in the case, of inputting a threshold value of 8 V, it is possible to obtain a hexadecimal digital value for the value of 8 V based on a resolution of the used hardware from the graph shown in Fig. 3 or the conversion tables shown in Figs. 4A and 4B. For example, for a 8-bit resolution, a digital value "CC" is obtained as a hexadecimal value. This digital value "CC" is entered from the keys provided on the programming device 101.

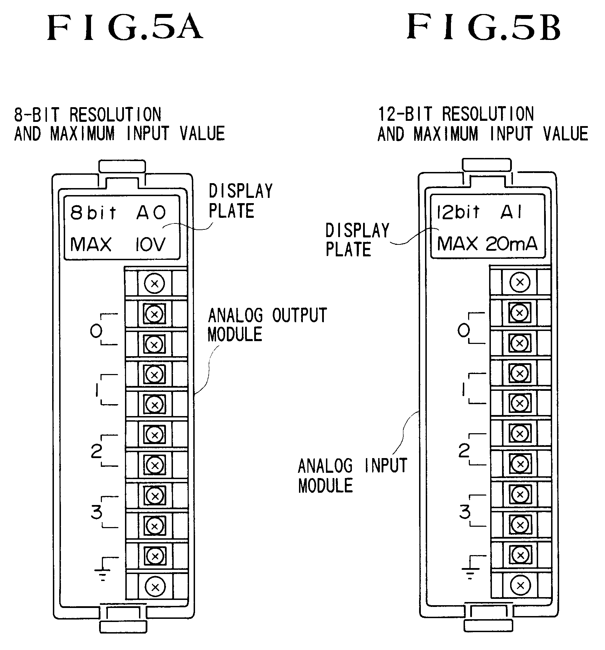

Each time a threshold value is entered, the operator has to take the burdensome steps of deriving the digital value for the resolution of the used hardware as shown in Fig. 5A or 5B from the conversion table and entering the derived digital value from the keyboard. These burdensome conversion steps result in consuming lot of time when making a program. In particular, for a 12-bit resolution, the conversion steps become far more troublesome, because far more digits are required than the 8-bit resolution. Further, when revising the created program, the above converting or translating steps are inconvenient and hard to use.

SUMMARY OF THE INVENTION

It is an object of the present invention to provide a programmable logic controller which allows an input of a numerical value to be directly specified for easily and swiftly carrying out the programming operation and a programming device therefor.

It is another object of the present invention to provide a controller which does not need the step of converting or translating a threshold value based on the resolution of the hardware by hands or by using a calculator and is capable of easily and swiftly creating a plain program.

It is yet another object of the present invention to provide a programmable logic controller which needs fewer program steps for the purpose of speeding up a scan time.

In carrying out the objects, a programmable logic controller providing a programming device therein includes an analog key for directly specifying an input of a numerical value corresponding to an analog threshold in the programming device, converting means for an analog-specified value sent together with an input of the analog key into a digital value for the sequence program, and reverse-converting means for reversely converting or translating the digital value into an analog set value.

In operation, for inputting a threshold value, an operator can directly enter an numerical value with the analog key without having to enter the hexadecimal digital value translated from the analog value. For example, in the case of entering 12 mA, the operator presses one of the analog keys, "mA" key and then a numerical value by the numerical key 12. For specifying a maximum value for the resolution, the operator also enters the maximum value with the numerical key. Then, the "mA" key of the analog key is pressed and the numerical value by the numerical key "12" is input. After terminating the entering operation of these value, the programmable logic controller operates to derive a digital value calculated in accordance with a combination of the entered value with the resolution and create the sequence program based on the digital value. In reading the programmed digital value, the programmable controller operates to derive an analog set value corresponding to the digital value in the reverse converting means and display the derived analog set value.

## BRIEF DESCRIPTION OF THE DRAWINGS

Figs. 1, 2A and 2B are views showing outer appearances of a process controller, a programmable logic controller and a programming device according to the present invention;

Figs. 3, 4A, 4B, 5A and 5B are views showing input values, hexadecimal translations and maximum input values for an 8-bit and a 12-bit resolution;

Fig. 6 is a view showing a controller according to an embodiment of the present invention;

Fig. 7 is a view showing key arrangement of the controller according to an embodiment of the present invention;

Figs. 8A to 8J are views key input procedures of the controller according to an embodiment of the present invention;

Fig. 9 is a view showing flow of the process of the controller according to an embodiment of the present invention;

Figs. 10, 11, 12A and 12B are views showing arrangements of a key buffer and an instruction word held in the key buffer according to the present invention;

Figs. 13, 14A, 14B and 15 are views showing procedures for converting an input signal into a digital value based on the resolution to the input signal and ratios used in performing the procedures; and

Fig. 16 is a view showing a sequence program executed in the controller according to the present invention; and

Figs. 17 and 18 are views showing a controller according to another embodiment of the present invention.

## DESCRIPTION OF THE PREFERRED EMBODIMENTS

Hereafter, the description will be directed to an embodiment of the present invention as referring to the drawings.

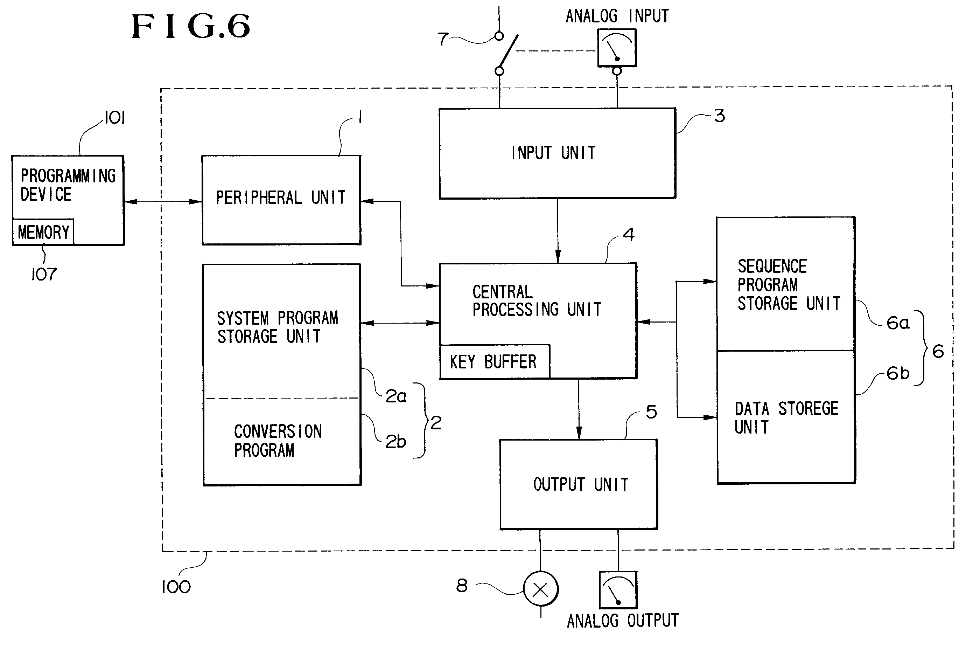

Fig. 6 is a block diagram showing arrangement of a programmable logic controller (PLC) according to an embodiment of the present invention. The programmable logic controller 100 is configured to have a central processing unit 4, an input unit 3 for reading a keying signal or an analog signal sent from a limit switch or a sensor 7 of the to-be-controlled side, an output unit 5 for outputting the resulting operation of the central processing unit 4 to a load 8 of the to-be-controlled side or an analog control unit, a storage unit 2 such as a ROM for storing a system program for the programmable controller, a rewritable storage unit 6 like a RAM, and an interface between the programmable logic controller and a programming device 101. The storage unit 6 stores a sequence program in an area 6a. The sequence program is created by a user with the programming device 101. The storage unit 6 further stores data operated by the central processing unit 4 or data read from the to-be-controlled side in an area 6b. The storage unit 2 includes a storage area 2a for the system program and a storage area 2b for storing a translating program. The translating program corresponds to the translating graphs and tables shown in Figs. 3, 4A and 4B.

The graph in Fig. 3 merely indicates the relation between a maximum value and an input set value, while the translating program calls the following equation from the system program at any time based on the relation shown in Fig. 3.

$$\text{Stored value in PC} = 256 \times \text{set value/predetermined maximum value} \quad (1)$$

wherein "256" is a 8-bit resolution and the value stored in the programmable logic controller (PLC) is represented by a decimal number. The translating program includes a program for translating the decimal number into a hexadecimal number.

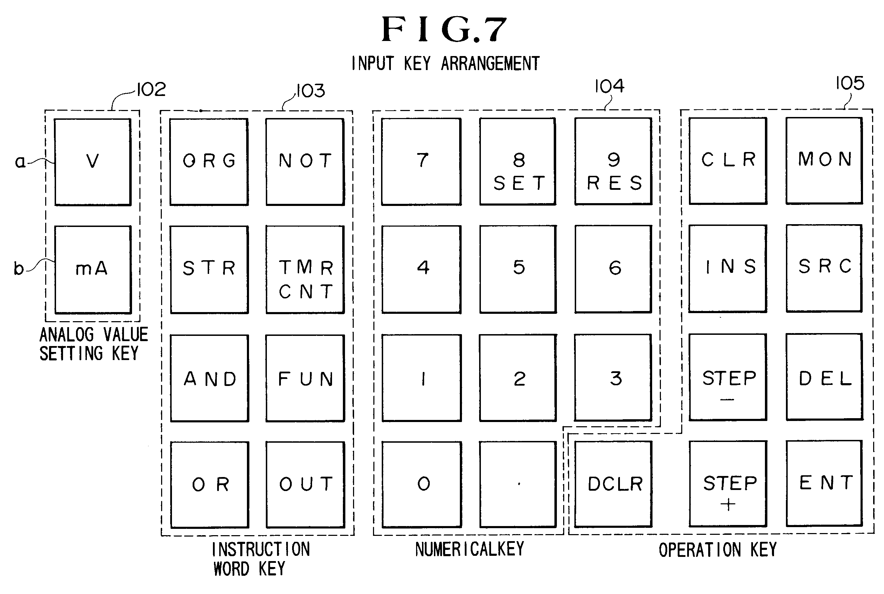

Fig. 7 shows arrangement of input keys provided in the programming device 101 provided in the controller. The input keys contain instruction keys, numerical keys and operation keys like the prior arts. As shown, the analog value setting keys 102 provide just two keys of a "V" key $a$ and an "mA" key $b$, because the analog data required for the sequence program of the programmable logic controller of this embodiment are just a voltage value represented at volt unit and a current value represented at milliampere unit.

The device 101 includes a memory 107 for data input through the analog keys 102 and others.

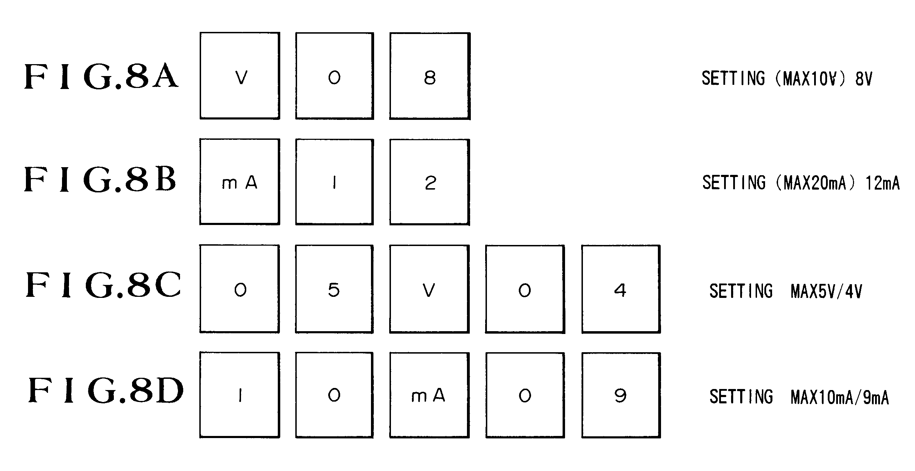

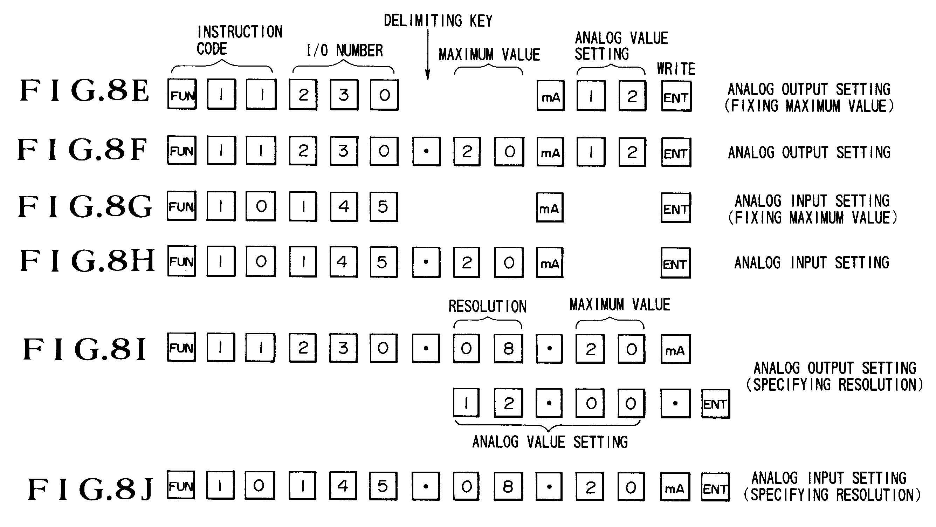

Figs. 8A to 8J are explanatory views showing procedures for inputting threshold data together with using the analog value setting keys 102.

Figs. 8A and 8B are explanatory views for inputting an analog value whose maximum value is fixed.

Figs. 8C and 8D are explanatory views for inputting an analog value and specifying its maximum value at the input.

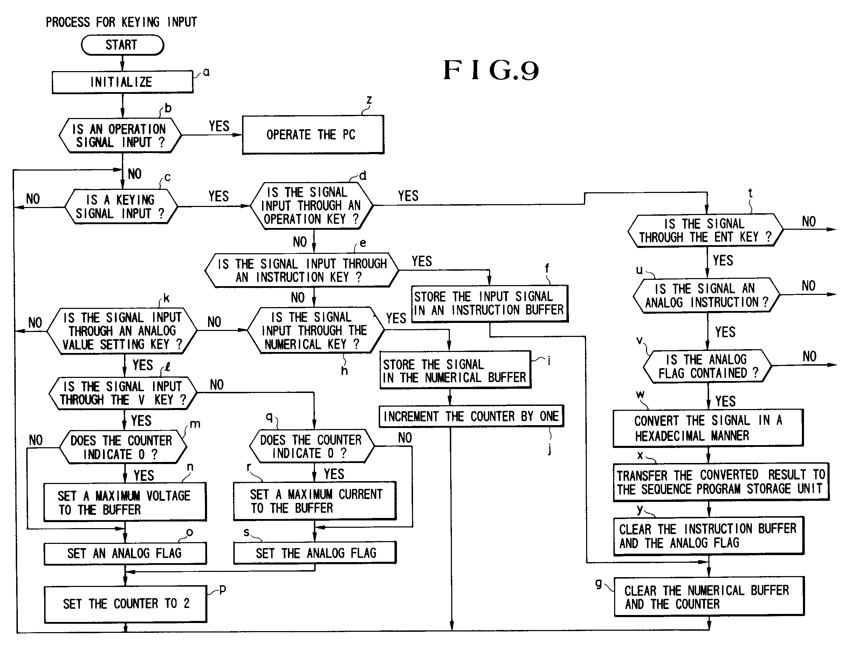

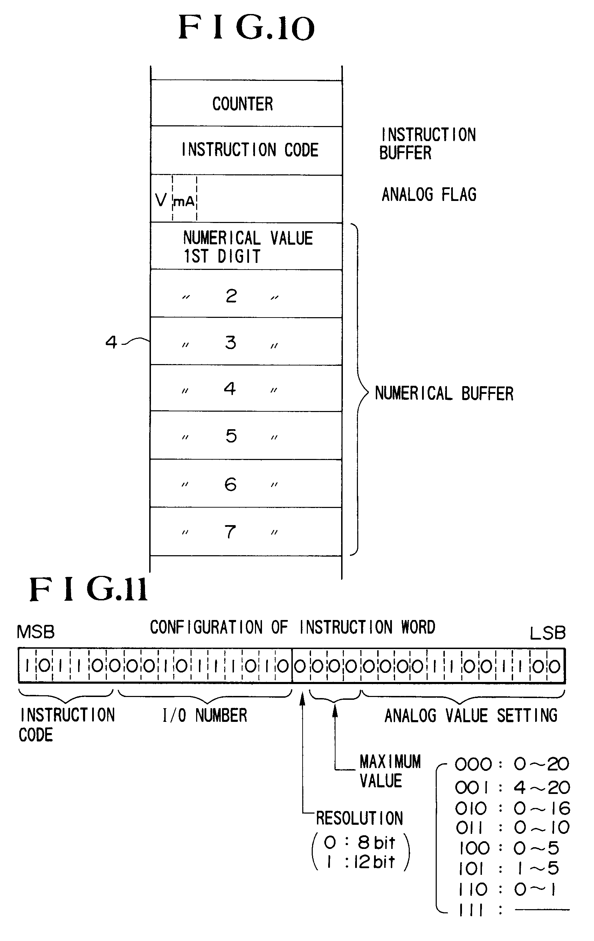

Assuming that the maximum value of the analog value to be input is fixed at 10 V and the programmable logic controller has an 8-bit resolution in itself, a value of 10 V is assigned to match to a hexadecimal value of "FF". Fig. 8A shows the case where a value of 8 V is input in this assumption. For inputting this value, it is necessary to input the analog value setting key "V" and then the numerical keys "0" and "8". In response to the input values, the central processing unit serves to derive a hexadecimal of "CC" matching to 8 V in the translating program stored at the area 2b of the storage unit 2 and stores the hexadecimal value of "CC" in the storage area 6a. The process will be described as referring to Figs. 9 and 10.

When the programmable logic controller is powered on, the system program starts to initialize the programmable logic controller (step a shown in Fig. 9). Then, it is checked whether an operation input is given or not at step b. If not, the process goes to a step c. If yes, the operating process of the operation input is carried out according to the content of the sequence program stored in the storage area 6a shown in Fig. 6.

As mentioned above, if the programmable controller is inoperative, the process goes to the step c at which it is checked whether or not the key input is presented based on the key input signal entered from the keys of the programming device 101 shown in Fig. 7 through a peripheral device I/F unit I. If not, the programmable controller waits for key inputs again. If yes, the process goes to a step d at which it is determined what the input key is. If the input key belongs to one of the operation keys, the process goes to a step t. In the above-mentioned operating example, the analog value setting key is entered. Hence, at the step d, the answer is no. Further, "no" is given at a step e of an instruction key determining block and a step h of a numerical key determining block. At a step k of the analog value setting key, "yes" is given. Then, at a step l, it is determined what kind of the analog value setting key the input key is. In the above-mentioned example, the input key is the V key. Hence, the process goes to a step m.

At the step m, it is determined whether or not the counter has a value of "0". The value of the counter will be described later. In this example, since it has a value of "0", the process goes to a step n at which the maximum value of the predetermined voltage (10 V) is described at the first and the second digits of a key buffer shown in Fig. 10. The key buffer means a working memory built in the CPU 4. The key buffer may be provided in the data storage area 6b in place of the CPU 4. Then, an analog flag is set indicating that the analog voltage is input. In the example shown in Fig. 5, "I" is set at the location of V (step o in Fig. 9).

Proceeding to a step p, the counter is set to 2 so that any numerical value is allowed to be entered at the third digit. Then, returning to the step c, the next coming key input is awaited.

Since the second input shown in Fig. 8A is a 0 key, the process passes through the steps d and e and goes to the step h at which the second input is determined to be the 0 key. Then, the second input is stored at the third digit of the numerical buffer at the step i. The counter is incremented by 1 at the step j. The process returns to the step c.

Likewise, when the 8 key is pressed, the third input is stored at the fourth digit.

Though not shown for more clearly understanding the invention in Fig. 8A-D, before operating these analog value setting key and numerical key, the instruction work key is pressed for instructing the kind of process to be executed. This instruction word key is determined at the step e and then is stored in the instruction buffer shown in Fig. 5 at the step f. Then, the process (at the step g) is carried out by clearing the numerical buffer and the counter (resetting them to zero).

After executing the operation, though not shown in Figs. 8A to 8D, the operation is carried out for transferring the contents into the sequence program storage unit (the ENT key is pressed in this embodiment). After it is determined whether or not the pressed key is the ENT key at a step t, the content of the instruction word is checked (at a step u) for checking whether or not a flag named an analog flag is presented. The content of a decimal value stored in the numerical buffer in the key buffer is translated into a hexadecimal or binary value and then is calculated by equation (1) (step w). Next, the calculated result is composed into the arrangement of an instruction word of an intermediate language. The composite word is transferred into the sequence program storage unit 6a (step x) shown in Fig. 6.

The content of the key buffer is cleared (steps y and g) and then the process returns to the step c.

The first buffer is a rewritable memory built in the central processing unit 4 in this embodiment. It may be built in the data storage unit.

For describing the determining step m in detail, when the maximum value (to be described later) is set, that is, in case that the numerical key is entered before operating the "V" key, the counter does not indicate a value of "0". The first and the second digits set in this case are treated as the maximum values. Hence, the process at the step n is not carried out. Likewise, the process at the steps g and r are not carried out.

In case that the maximum value is fixed at 20 mA, a value of 20 mA is assigned to correspond to a hexadecimal value "FF" when the resolution in the programmable controller is 8 bit. Fig. 8B shows the example where 12 mA is input in that case. An analog input key "mA" and the numerical keys "1" and "2" are pressed. In response to the input values, the central processing unit 4 serves to obtain the hexadecimal value "99" corresponding to a value of 12 mA through the effect of the translating program and to store the obtained value in the storage area 6a. The procedure is executed at the steps q, r and s shown in the flowchart of Fig. 9.

The detail will be described as referring to Figs. 8E to 8J, 9, 12A and 12B and 13.

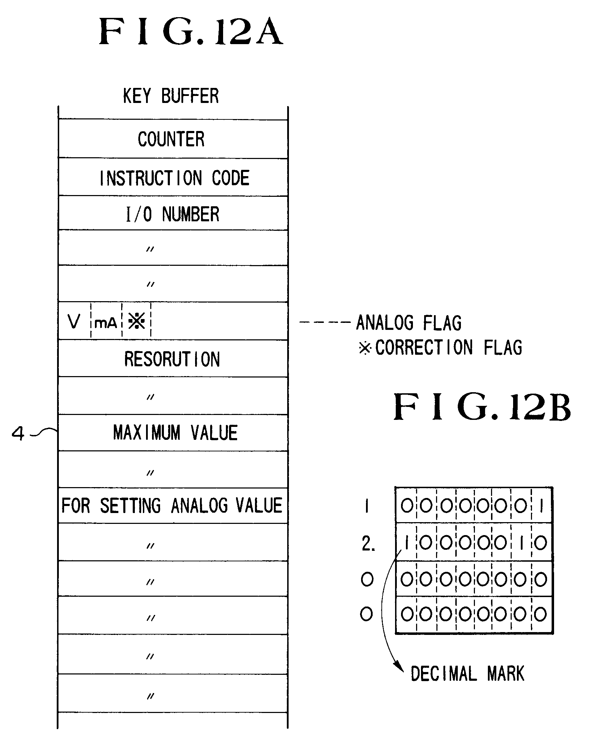

Figs. 8E to 8J show the input example containing the instruction word key and the operation key. Fig. 8E shows the example of an analog output setting operation where the maximum value is fixed at one kind. Fig. 8F is the case where the maximum value is changed. Figs. 8G and 8H show the example of the analog input setting operation wherein the maximum value is fixed and not fixed Figs. 12A and B show the location at which each content is stored in the key buffer by these operations. In Figs. 8F and 8H, a "." key is located between the I/O number and the maximum value. It is a delimiter for implementing easy identification of the I/O number if it is at the first or second digit.

By the operations shown in Figs. 8E to 8J, the key inputs are processed and transformed according to the process shown in the flowchart of Fig. 9.

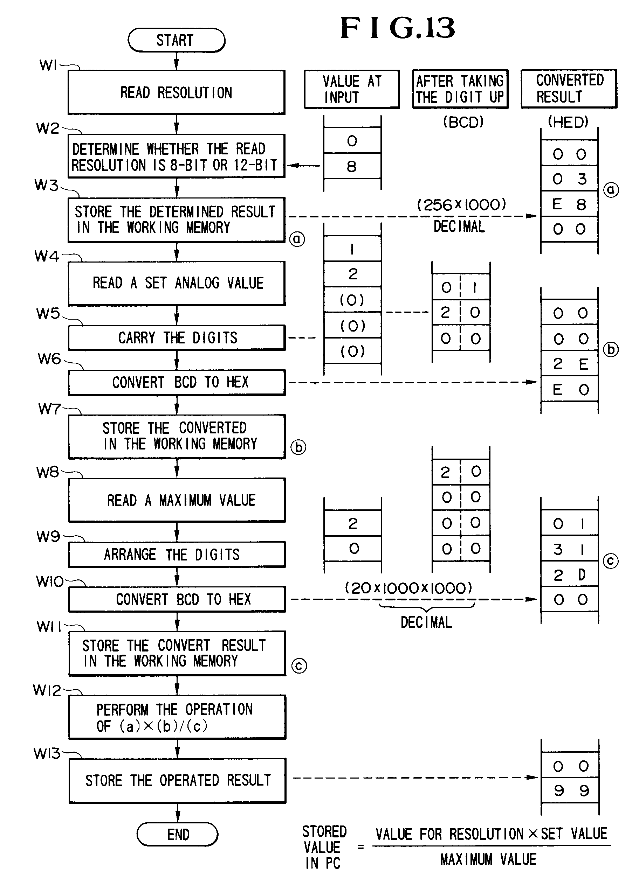

The translation will be described as referring to Fig. 13.

Fig. 13 is a flowchart for the translation from the input resolution (fixed in this embodiment), a maximum value and an analog value into the values to be stored in the programmable controller. The detail of the step w shown in Fig. 9 will be described.

At the steps w1 and w2, the process concerns with the resolution (also used for specifying three resolutions to be described later). At a step w3, the translated result is stored in the working memory built in the central processing unit 4. The 8-bit resolution means a resolution of 1/256. It matches to a value of 256 contained in the foregoing equation. Since the 8-bit resolution has the three effective numbers of the decimal number, the 1000-fold value is used for obtaining the 32-bit hexadecimal translation.

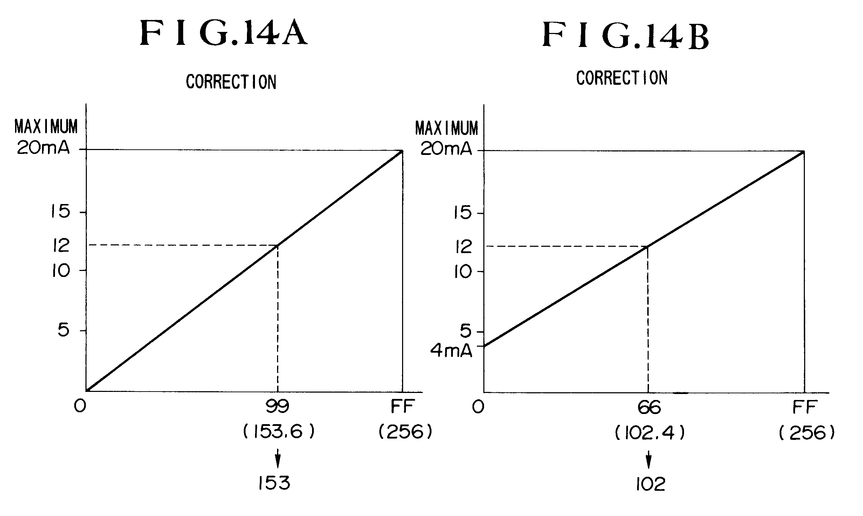

At a step w4, the analog set value is read and at a step w5 the digit positions are arranged to BCD. This is because the input value has a decimal or the places of decimals are removed from the input value. If the decimal is provided, a decimal mark is added as shown in Fig. 14 for determining the digit arrangement. If no decimal point is contained, the counter is a standard for determining the digit arrangement. When the digits are arranged, at a step w6, the translation from BCD to a hexadecimal value is carried out. For the translating method, there have been proposed various kinds of algorithms which are not described herein, though. In arranging the digits, the places of decimals are made 1000-fold to be a positive number.

At the steps w7, w8, w9, w10 and w11, the similar process is carried out for the maximum value. Since the maximum value matches to a denominator of the foregoing equation, it is necessary to multiply the maximum value by $10^6$ for arranging the digit positions at the step w9 by considering the fact that the resolution and the analog set value are 1000-folded.

At a step w2, the 32-bit hexadecimal translated result is processed by the foregoing equation for the purpose of obtaining the 32-bit final hexadecimal converted result. The final result is stored at a step w13 and then it transferred to the step x shown in Fig. 9.

Figs. 8I and 8J show the operating examples of specifying a resolution and a maximum value. A "." key is located between the resolution and the maximum value for more easily determining the resolution from the maximum value. The "." key immediately before the writing key "ENT" is pressed if revision or correction is necessary.

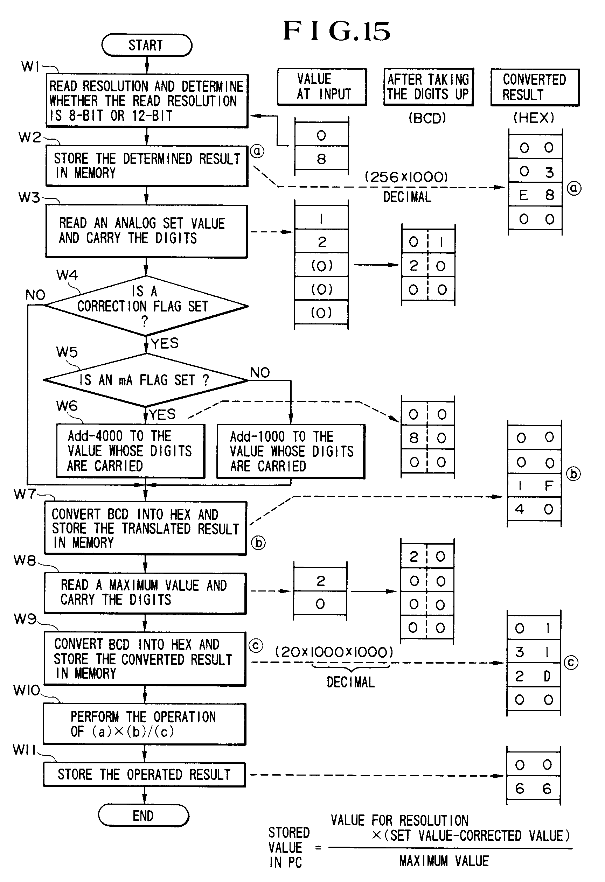

The detail of the operation will be described as referring to Figs. 14A and 14B and 15.

In the case of processing the analog amount, as shown in Fig. 14B, the signal range to be processed is often restrictive. This is as a result of cutting the lower value than a predetermined value in advance, because the signal is made so unstable in characteristic as reducing the reliability.

Fig. 14A shows the case wherein no restriction is given to the signal range. In this case, the same translation as mentioned above is carried out.

Figs. 14A and 14B show the cases wherein the hexadecimal values are respective even if a value of 12 mA is entered.

Fig. 15 is a flowchart for translating an analog set value into a stored value in the PC in the cases shown in Figs. 14A and 14B.

The equation is shown at the lower portion of Fig. 15. This is different from the above-mentioned equation in that a correction value is reduced from the set value. It results in adding the steps w4, w5 and w6 to the flowchart. At the step w6, - 4000 is added when the current value is corrected and - 1000 is added when the voltage is corrected. These values are the 1000-fold values with the decimal points. The kind of the maximum value is indicated in Fig. 11.

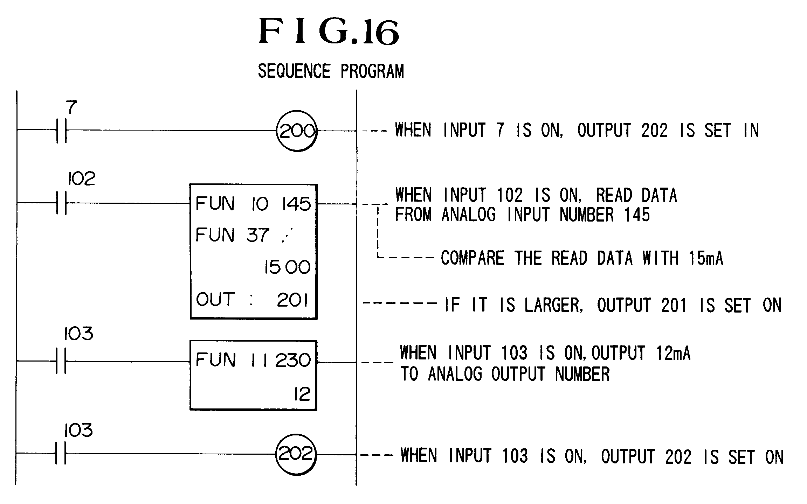

Then, the sequence program using the converting technique described above is shown in Fig. 16.

It is possible to separate an analog portion, that is, analog-to-digital and digital-to-analog converters, from the input unit 3 or the output unit 5 shown in Fig. 6 and arrange general-purpose modules. In this arrangement, the maximum values for these modules are respective.

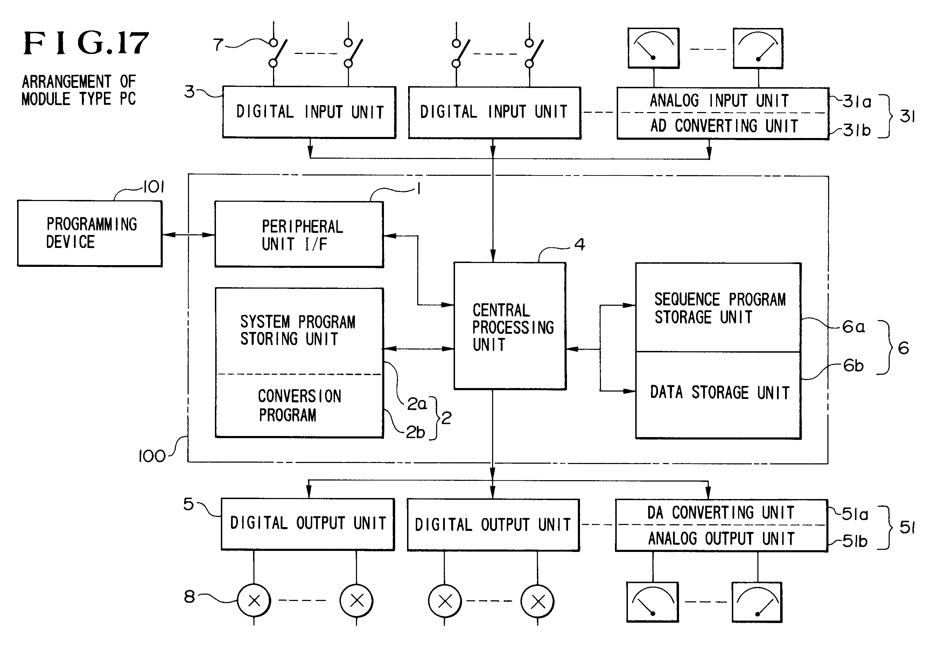

Fig. 17 shows block arrangements of a programmable controller in this case. 31 denotes an analog input unit arranged to have an analog input unit 31a and an analog-to-digital converting unit. 51 denotes an analog output unit arranged to have a digital-to-analog converting unit 51a and an analog output unit 51b.

Fig. 8C shows an input example assumed that the module is an analog module whose maximum value is 5 V. In this example, a value of 4 V is input. That is to say, in case that the 8-bit resolution is provided, the maximum value of 5 V is assigned to match to "FF" represented in hexadecimal notation. In case that a value of 4 V is input, in the translation program, the hexadecimal value "CC" is obtained and then is stored in the storage area 6a. At a time, the maximum value of 5 V ("0" and "5") is also entered at the start of the key input and is stored in the sequence program storage unit 6a. This is because it is necessary to know what the maximum value is when the input sequence program is read. It means that it is necessary to separate two or more modules whose maximum values are respective from each other.

Fig. 8D is an input example entered when a numerical value of 9 mA is entered in the case of using the module whose maximum value is 10 mA. The maximum value of 10 mA corresponds to "FF". The value of 9 mA corresponds to "E6" and is stored in the storage area 6a together with the maximum value of 10 mA. This process is true to the process described in the above-mentioned flowchart.

In the foregoing embodiment, for the analog value setting keys, there are provided two keys of the "V" key standing for voltage and the "mA" key standing for current. It will be readily understood by those skilled person in the art that if the maximum values are equal, only one key is needed. As a key display in this case, an "analog" key may be used. In addition, the numerical value is not limited for the current or the voltage but may apply to another value such as a resistance, a temperature or a pressure. Further, the foregoing embodiment have been described on the basis of the 8-bit resolution. However, the description may true to the 12-bit ("000" to "FFF" represented in hexadecimal notation) resolution.

Then, the resolution will be described. The 8-bit resolution is capable of representing a value ranging from 0 to 255. It means that the maximum value can be resolved by a factor of 256 in the 8-bit resolution.

Likewise, the 12-bit resolution is capable of representing a value ranging from 0 to 4095. It means that the maximum value can be resolved by a factor of 4096. Hence, the 12-bit resolution can achieve quite high accuracy. The high accuracy, however, results in being able to easily change the value through the effect of a slight noise contained in the analog input signal. A new problem of paying much attention to a signal line occurs in the case of using the 12-bit resolution.

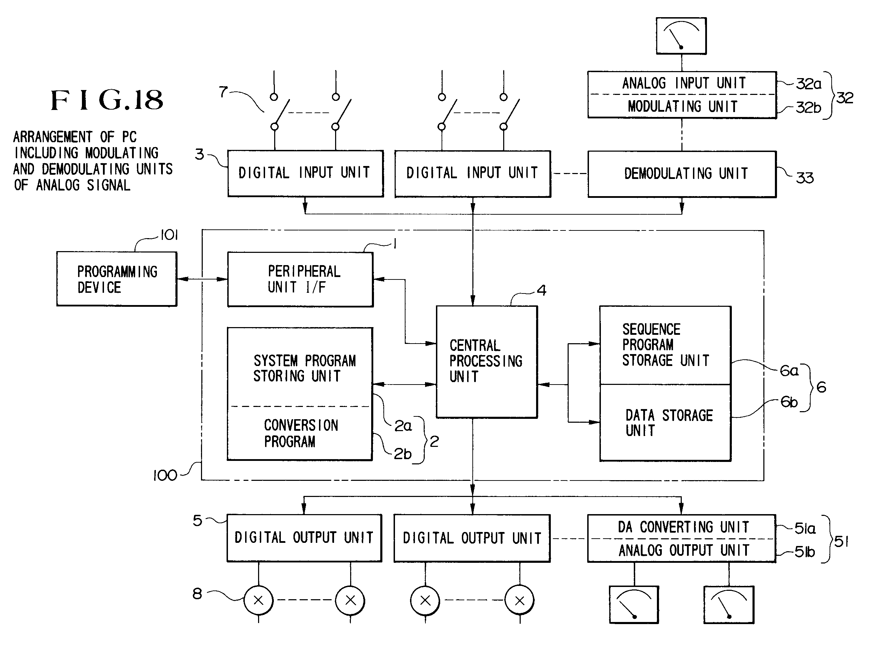

To cope with this problem, as shown in Fig. 18, it may be considered that the analog signal is frequency-or phase-modulated at an input source and then is demodulated from the analog amount to a digital value at an input stage of the programmable controller.

It results in making it possible to extend the signal line so long that an adverse effect is given to the analog input signal.

The above description has concerned with the conversion from the analog set value, or the input numerical threshold for an analog input, into a digital value. The reverse conversion from a digital value (hexadecimal) into an analog value (decimal) may be easily derived from the above-mentioned equation. That is,

Analog Set Value = Stored Value in PC X Maximum Value/256    (2)

wherein 256 denotes a 8-bit resolution. If a 12-bit resolution is used, it is 4096.

The present invention is used for facilitating the operation in executing the programming. The foregoing equations may apply to the process for operating the sequence program.

When a digital signal is directly applied to the input unit of the programmable controller as keeping a hexadecimal or a binary value, the foregoing equations make it easier to do calculations with respect to the maximum value or the resolution without having to do calculations one by one by using the sequence program, resulting in improving a processing speed (scan time).

The provision of macro instruction codes dedicated for using the foregoing equations results in more easily creating a program. It makes a contribution to reducing the amount of programming and improving the operating efficiency of an operator.

**Claims**

1. A programmable logic controller (100) including a CPU (4) and a memory (6) connected with said CPU and to be connected to a programming device (101) detachably connected therewith, characterized in that said programming device (101) includes a plurality of keys for inputting instructions for control and at least one analog key (102) for directly specifying an input of an analog value and said programmable logic controller (100) includes an analog input unit (31) connected with said CPU, an analog output unit (51b) connected with said CPU and converting means (2) connected with said CPU for converting a signal input indicating an analog value through said analog input unit (31) into a signal indicating a digital value used for a sequence program depending on the input of the analog value specified by said analog key (102).

2. A programmable logic controller claimed in claim 1, characterized in that said programmable logic controller (100) includes means (51a) connected with said CPU for converting said digital value into an analog signal specified by said analog key (102).

3. A programmable logic controller claimed in claim 1, characterized in that said programmable logic controller (100) further includes means (2b) connected with said CPU for performing a predetermined correction when said signal input is converted into said digital signal or said digital value is converted into said analog value.

4. A programmable logic controller claimed in claim 1, characterized in that said plurality of keys provide numerical keys used for inputting a numerical value on which a ratio for converting said input signal input corresponding to said at least one analog key into said digital value is defined.

5. A programmable logic controlling system including a CPU (4), a memory (6), a plurality of I/O modules and a programming device (101) connected with said CPU, characterized in that said programming device (101) includes at least one analog key (102) used for specifying an analog input and said programmable logic controlling system includes means (2) for converting a signal input through said input module (3) depending on the analog input specified by said analog key (102) into a digital value corresponding to a maximum value of an analog input at each output module and means (51) for reversely converting a digital value contained in a sequence program in said memory into another analog value.

6. A programmable logic controlling system as claimed in claim 5, characterized in that said programmable logic controlling system includes means (31) connected with said CPU for converting said input signal relating to said analog input into said digital value based on the maximum value of said input signal and the number of bits contained in a digital value set for said input module (3).

7. A programmable logic controlling system as claimed in claim 5, characterized in that said programming device (101) includes a plurality of numerical keys and said programmable logic controlling system includes means (31) for converting a plurality of input signals into a plurality of digital value based on maximum values of signal inputs, respectively.

8. A programming device (101) to be connected to a programmable logic controller (100) having a capability of an input to said programmable logic controller for a sequence program, characterized in that said programming device (101) provides instruction keys used for inputting control instructions, numerical keys used for inputting parameters for control, and analog keys (102) for specifying an input of an analog value.

9. A programming device (101) as claimed in claim 8, characterized in that said programmable device (101) providing said analog keys (102), said instruction keys and said numerical keys arranged on a plane and further a plurality of operation keys (105) used for generating a signal sent to said programmable logic controller (100) by operating the inputs to said keys, said operation keys being located adjacent to said other keys.

10. A programming device (101) as claimed in claim 8, characterized in that said programming device further includes connector means to be detachably connected to said programmable logic controller (100).

11. A programming device (101) as claimed in claim 9, characterized in that said programming device further includes a storage area (107) for storing the data input through said instruction keys, numerical keys and analog keys (102).

12. A method for inputting programming conditions in a control system having a programming unit used for inputting the content of control and a programmable logic controller (100) connected to said programming unit and used for outputting a control signal, characterized by comprising the steps:

a) detecting a keying signal specified as an analog signal;

b) detecting a signal input through a numerical key;

c) converting an input data into a digital value corresponding to the predetermined number of digital bits by using the numerical value input through said numerical key as a maximum value; and

d) outputting a control signal formed from said converted digital value.

13. A programmable logic controller including a CPU (4) and a memory (6) and having a capability of an input data into a digital value of a sequence program, characterized in that said programmable logic controller (100) includes means (31) for converting said digital value in said sequence program into an analog signal, means connected with said converting means (32) for correcting an input signal specified as an analog value when converting said analog input signal into a digital value, means (51) connected with said CPU and said memory for correcting said digital value in said sequence program and converting said corrected digital value into an analog set value when converting.

# F I G.1

## PROCESS CONTROLLING DEVICE

ANALOG INPUT

ANALOG OUTPUT

# F I G.2A        F I G.2B

## PROGRAMMABLE LOGIC CONTROLLER AND PROGRAMMING DEVICE

# F I G.3

EP 0 498 066 A2

# F I G.4A

8-BIT RESOLUTION
AND CONVERSION TABLE

MSB                               LSB
15                    7            0

| 0 | 0 | 0 | 0 | 0 | 0 | 0 | 0 | x | x | x | x | x | x | x | x |

8 bit

| VOLTAGE(V) | CONVERTED VALUE(HEX) |
|---|---|
| 0.000 | 0 |
| 0.004 | 1 |
| 0.008 | 2 |
|  |  |
| 8.000 | CC |
|  |  |
| 9.996 | FE |
| 10.000 | FF |

# F I G.4B

12-BIT RESOLUTION
AND CONVERSION TABLE

MSB                               LSB
15        11                      0

| 0 | 0 | 0 | 0 | x | x | x | x | x | x | x | x | x | x | x | x |

12 bit

| CURRENT(mA) | CONVERTED VALUE(HEX) |
|---|---|
| 0.0000 | 0 |
| 0.0024 | 1 |
| 0.0049 | 2 |
|  |  |
| 8.0000 | 666 |
|  |  |
|  |  |
| 19.9951 | FFD |
| 19.9976 | FFE |
| 20.0000 | FFF |

# F I G.5A

# F I G.5B

8-BIT RESOLUTION
AND MAXIMUM INPUT VALUE

12-BIT RESOLUTION
AND MAXIMUM INPUT VALUE

# FIG.6

**ANALOG INPUT**

7

3 — INPUT UNIT

101 — PROGRAMMING DEVICE
MEMORY
107

1 — PERIPHERAL UNIT

2 — SYSTEM PROGRAM STORAGE UNIT
CONVERSION PROGRAM
2a
2b

4 — CENTRAL PROCESSING UNIT
KEY BUFFER

6 — SEQUENCE PROGRAM STORAGE UNIT
6a
6b
DATA STOREGE UNIT

5 — OUTPUT UNIT

8 — ANALOG OUTPUT

100

EP 0 498 066 A2

# FIG.7

INPUT KEY ARRANGEMENT

102     103     104     105

| | | | | | | | |
|---|---|---|---|---|---|---|---|
| a — V | ORG | NOT | 7 | 8 SET | 9 RES | CLR | MON |
| b — mA | STR | TMR CNT | 4 | 5 | 6 | INS | SRC |
| | AND | FUN | 1 | 2 | 3 | STEP − | DEL |
| | OR | OUT | 0 | . | DCLR | STEP + | ENT |

ANALOG VALUE SETTING KEY

INSTRUCTION WORD KEY

NUMERICALKEY

OPERATION KEY

EP 0 498 066 A2

# FIG.8A

| V | O | 8 |

SETTING (MAX10V) 8V

# FIG.8B

| mA | I | 2 |

SETTING (MAX20mA) 12mA

# FIG.8C

| O | 5 | V | O | 4 |

SETTING  MAX5V/4V

# FIG.8D

| I | O | mA | O | 9 |

SETTING  MAX10mA/9mA

EP 0 498 066 A2

FIG.8E — INSTRUCTION CODE [FUN][1][1] I/O NUMBER [2][3][0] DELIMITING KEY — MAXIMUM VALUE — ANALOG VALUE SETTING [mA][1][2] WRITE [ENT] — ANALOG OUTPUT SETTING (FIXING MAXIMUM VALUE)

FIG.8F — [FUN][1][1][2][3][0][·][2][0][mA][1][2][ENT] — ANALOG OUTPUT SETTING

FIG.8G — [FUN][1][0][1][4][5][mA][ENT] — ANALOG INPUT SETTING (FIXING MAXIMUM VALUE)

FIG.8H — [FUN][1][0][1][4][5][·][2][0][mA][ENT] — ANALOG INPUT SETTING

FIG.8I — [FUN][1][1][2][3][0][·] RESOLUTION [0][8][·] MAXIMUM VALUE [2][0][mA] / [1][2][·][0][0][·][ENT] ANALOG VALUE SETTING — ANALOG OUTPUT SETTING (SPECIFYING RESOLUTION)

FIG.8J — [FUN][1][0][1][4][5][·][0][8][·][2][0][mA][ENT] — ANALOG INPUT SETTING (SPECIFYING RESOLUTION)

EP 0 498 066 A2

# FIG.9

PROCESS FOR KEYING INPUT

START

a — INITIALIZE

b — IS AN OPERATION SIGNAL INPUT ? — YES → z — OPERATE THE PC

c — IS A KEYING SIGNAL INPUT ? — NO

d — IS THE SIGNAL INPUT THROUGH AN OPERATION KEY ? — YES → t — IS THE SIGNAL THROUGH THE ENT KEY ? — NO / YES → u — IS THE SIGNAL AN ANALOG INSTRUCTION ? — NO / YES → v — IS THE ANALOG FLAG CONTAINED ? — NO / YES → w — CONVERT THE SIGNAL IN A HEXADECIMAL MANNER → x — TRANSFER THE CONVERTED RESULT TO THE SEQUENCE PROGRAM STORAGE UNIT → y — CLEAR THE INSTRUCTION BUFFER AND THE ANALOG FLAG → g — CLEAR THE NUMERICAL BUFFER AND THE COUNTER

e — IS THE SIGNAL INPUT THROUGH AN INSTRUCTION KEY ? — NO / YES → f — STORE THE INPUT SIGNAL IN AN INSTRUCTION BUFFER

h — IS THE SIGNAL INPUT THROUGH THE NUMERICAL KEY ? — YES → i — STORE THE SIGNAL IN THE NUMERICAL BUFFER → j — INCREMENT THE COUNTER BY ONE

k — IS THE SIGNAL INPUT THROUGH AN ANALOG VALUE SETTING KEY ? — NO

l — IS THE SIGNAL INPUT THROUGH THE V KEY ? — YES / NO

m — DOES THE COUNTER INDICATE 0 ? — YES / NO

n — SET A MAXIMUM VOLTAGE TO THE BUFFER

o — SET AN ANALOG FLAG

p — SET THE COUNTER TO 2

q — DOES THE COUNTER INDICATE 0 ? — YES / NO

r — SET A MAXIMUM CURRENT TO THE BUFFER

s — SET THE ANALOG FLAG

17

# F I G.10

| | |
|---|---|
| COUNTER | |
| INSTRUCTION CODE | INSTRUCTION BUFFER |
| V mA | ANALOG FLAG |
| NUMERICAL VALUE 1ST DIGIT | |
| " 2 " | |
| " 3 " | NUMERICAL BUFFER |
| " 4 " | |
| " 5 " | |
| " 6 " | |
| " 7 " | |

4

# F I G.11

CONFIGURATION OF INSTRUCTION WORD

MSB                                                                 LSB

| 1 0 1 1 0 0 0 0 1 0 1 1 1 0 1 0 0 0 0 0 0 0 0 0 0 1 1 0 0 1 1 0 0 |

INSTRUCTION CODE     I/O NUMBER     ANALOG VALUE SETTING

MAXIMUM VALUE

RESOLUTION
$\begin{pmatrix} 0 : 8\,bit \\ 1 : 12\,bit \end{pmatrix}$

```
000 : 0~20
001 : 4~20
010 : 0~16
011 : 0~10
100 : 0~5
101 : 1~5
110 : 0~1
111 : ———
```

# F I G. 12A

KEY BUFFER

| |
|---|
| COUNTER |
| INSTRUCTION CODE |
| I/O NUMBER |
| ″ |
| ″ |
| V ¦ mA ¦ ※ ¦ |
| RESORUTION |
| ″ |
| MAXIMUM VALUE |
| ″ |
| FOR SETTING ANALOG VALUE |
| ″ |
| ″ |
| ″ |
| ″ |
| ″ |

4

– – – – ANALOG FLAG
※ CORRECTION FLAG

# F I G. 12B

```
 I   | O¦O¦O¦O¦O¦O¦O¦ I |
2.   | I¦O¦O¦O¦O¦O¦ I ¦O |
 O   | O¦O¦O¦O¦O¦O¦O¦O |
 O   | O¦O¦O¦O¦O¦O¦O¦O |
```

DECIMAL MARK

FIG.13

STORED VALUE IN PC = (VALUE FOR RESOLUTION × SET VALUE) / MAXIMUM VALUE

# F I G.14A

CORRECTION

MAXIMUM
20mA

15

12
10

5

O            99       FF

( 153.6 )    ( 256 )

↓

153

# F I G.14B

CORRECTION

MAXIMUM
20mA

15

12
10

5
4mA

O           66      FF

( 102.4 )   ( 256 )

↓

102

EP 0 498 066 A2

# F I G.15

STORED VALUE IN PC = $\dfrac{\text{VALUE FOR RESOLUTION} \times (\text{SET VALUE} - \text{CORRECTED VALUE})}{\text{MAXIMUM VALUE}}$

# F I G.16

SEQUENCE PROGRAM

WHEN INPUT 7 IS ON, OUTPUT 202 IS SET IN

WHEN INPUT 102 IS ON, READ DATA
FROM ANALOG INPUT NUMBER 145

COMPARE THE READ DATA WITH 15mA

IF IT IS LARGER, OUTPUT 201 IS SET ON

WHEN INPUT 103 IS ON, OUTPUT 12mA
TO ANALOG OUTPUT NUMBER

WHEN INPUT 103 IS ON, OUTPUT 202 IS SET ON

FUN 10 145
FUN 37
15 00
OUT : 201

FUN 11 230
12

EP 0 498 066 A2

# FIG.17

ARRANGEMENT OF
MODULE TYPE PC

EP 0 498 066 A2

F I G.18

ARRANGEMENT OF PC
INCLUDING MODULATING
AND DEMODULATING UNITS
OF ANALOG SIGNAL